# EUROPÄISCHE PATENTSCHRIFT

(11) **EP 0 705 970 B1**
(45) Veröffentlichungstag und Bekanntmachung des Hinweises auf die Patenterteilung: **07.06.2000**
(21) Anmeldenummer: 95113886.6
(22) Anmeldetag: 05.09.1995
(51) Int. Cl.: F02M 25/07, F01N 3/30, F01N 3/34

(54) **Mehrzylindrige Brennkraftmaschine**
Multi-cylinder internal combustion engine
Moteur à combustion interne polycylindrique

(30) Priorität: 05.10.1994 DE 4435555
(43) Veröffentlichungstag der Anmeldung: 10.04.1996
(73) Patentinhaber: Dr.Ing.h.c. F. Porsche Aktiengesellschaft, 70435 Stuttgart (DE)
(72) Erfinder: Schneider, Klaus, D-75233 Tiefenbronn (DE)

(56) Entgegenhaltungen:
- FR-A- 2 655 382
- FR-A- 2 696 787
- US-A- 4 269 029
- PATENT ABSTRACTS OF JAPAN vol. 8 no. 124 (M-301) ,9.Juni 1984 & JP-A-59 029738 (TOUKIYOU ROKI KK) 17.Februar 1984,

## Beschreibung

Die Erfindung geht aus von einer mehrzylindrigen Brennkraftmaschine mit einem Ansaug- und einem Abgassystem nach der Gattung des Hauptanspruches.

Um mit Brennkraftmaschinen die derzeitigen und zukünftigen gesetzlichen Abgasvorschriften erfüllen zu können, sind zum Teil erhebliche Eingriffe in den Abgasstrang und den Verbrennungsvorgang erforderlich. Zwei bekannte Verfahren zur Verbesserung des Schadstoffgehaltes sind die Sekundärlufteinspeisung und die externe Abgasrückführung.

Aus der US-PS 4 727 717 ist eine Brennkraftmaschine bekannt, bei der in die Auslaßkanäle im Zylinderkopf ausgebildete Sekundärkanäle münden, die mit einer im Gehäuse der Brennkraftmaschine integrierten Sammelleitung verbunden sind. Über diese Sammelleitung und die in die Auslaßkanäle mündenden Sekundärkanäle wird Frischluft in das Abgassystem eingebracht, um eine schnellere Aufheizung eines Abgaskatalysators zu ermöglichen. Dabei werden die aufgrund des fetteren Kraftstoff-Luftgemisches in der Warmlaufphase des Motors stärker vorhandenen Anteile brennbarer Komponenten im Abgas durch Zugabe von Sekundärluft unter Freisetzung von Wärme oxidiert und so zur Beschleunigung der Katalysatoraufheizung verwendet.

Gemäß der FR-A-2 696 787 ist eine Brennkraftmaschine mit einem Zylinderkopf und einer Sammelleitung bekannt, die außerhalb des Zylinderkopfs verläuft. Diese Ausführung zieht wegen der separaten Anordnung der Sammelleitung einen beachtlichen Bauaufwand nach sich.

Eine weitere Form der Emissionsverbesserung bzw. -reduzierung ist die externe Abgasrückführung. Dabei wird in Abhängigkeit bestimmter Betriebsbereiche der Brennkraftmaschine ein Teil des Abgases in das Ansaugsystem der Brennkraftmaschine zurückgeführt. Bei dieser externen Abgasrückführung wird der der Brennkraftmaschine zugeführten Verbrennungsluft relativ kaltes Abgas zugemischt, wodurch die NOₓ-Entstehung aufgrund des Einflusses des rückgeführten Abgases reduziert wird. Dabei wird aus dem Abgasstrang der Brennkraftmaschine ein Teil des Abgases entnommen und über ein Abgasrückführungsventil dem Saugsystem zugeführt.

Der Erfindung liegt die Aufgabe zugrunde, eine Brennkraftmaschine so auszubilden, daß beide Systeme der Emissionsverbesserung, die Sekundärlufteinspeisung und die externe Abgasrückführung mit möglichst geringem konstruktiven Aufwand betrieben werden können. Dabei sollen beide Systeme der Emissionsverbesserung mit möglichst geringem Leitungsaufwand nutzbar sein.

Diese Aufgabe wird erfindungsgemäß mit den kennzeichnenden Merkmalen des Anspruches 1 gelöst. Durch "Doppel"-Nutzung der für eine Sekundärlufteinspeisung in das Abgassystem vorhandenen Sekundärkanäle und der Sammelleitung für die Abgasrückführung in das Ansaugsystem wird der Leitungsaufwand an der Brennkraftmaschine erheblich reduziert. Durch die "Doppel"-Nutzung von Teilen des Sekundärlufteinspeisungssystems wird nicht nur Leitungsweg an sich eingespart, darüber hinaus ist die nahezu vollständige Integration beider emissionsverbessernder Maßnahmen durch Leitungsführung im Motorgehäuse möglich. Die entsprechenden Kanäle können unter Ausnutzung vorhandener Hohlräume oder durch Integration in entsprechend geeignete Gehäusebestandteile ausgebildet werden. Dadurch ist es möglich, auf aufwendige, externe Rohrleitungssysteme zu verzichten. Die in das Gehäuse integrierten Kanäle können dabei ohne wesentlichen Mehraufwand bei der Herstellung des Zylinderkopfes mit erstellt werden. Dabei können diese Kanäle zumindest teilweise in der Gußform unter Verzicht auf spanende Herstellung erstellt werden. Durch die Integration der Kanäle ist weiterhin eine Beeinflussung der Unterbringung von Anbauteilen an das Motorgehäuse ausgeschlossen.

Die erfindungsgemäße in den Zylinderkopf integrierte Sammelleitung läßt sich fertigungstechnisch besonders einfach ausbilden. Dabei kann vorteilhaft sein, wenn sie in eine Flanschfläche des Zylinderkopfes eingelassen wird, die zur Anbindung des Abgaskrümmers dient, und wenn diese Sammelleitung durch eine Anlagefläche des Abgaskrümmers abgedeckt wird. Die Sammelleitung ist somit bei der Herstellung des Zylinderkopfes als nach oben offene Vertiefung bzw. Nut auszubilden, und kann bereits bei der Erstellung der Gußform ausgeformt werden. Die einzig erforderliche spanende Bearbeitung der Sammelleitung ist die unabhängig davon erforderliche Bearbeitung der Flanschfläche.

Insbesondere wenn diese Sammelleitung durch einen zwischen zwei benachbarten Zylinderbohrungen im Gehäuse verlaufenden Verbindungskanal mit den Ventilen (Abgasrückführungsventil bzw. Sekundärluftventil) verbunden ist, ergibt sich auch hier eine platzsparende Integration in das Gehäuse. Auch dieser Verbindungskanal kann fertigungstechnisch einfach ohne spanende Fertigungsschritte in einer Gußform hergestellt werden.

Der weitgehende Verzicht auf spanende Bearbeitung und die Integration der Kanäle in das Gehäuse der Brennkraftmaschine wird darüber hinaus auf vorteilhafte Weise erreicht, wenn der im Zylinderkopf ausgebildete Verbindungskanal zur Sammelleitung in eine Gehäuseaussparung im Kurbelgehäuse mündet, die ebenfalls durch Ausbildung der Gußform erstellt werden kann.

Die spanlose Herstellung dieser Gehäuseaussparung im Kurbelgehäuse wird erleichtert, wenn diese zum Zylinderkopf hin offen ist, so daß die Verbindung zwischen dem Verbindungskanal im Zylinderkopf und der Gehäuseaussparung im Kurbelgehäuse in der Flanschfläche zwischen den beiden Bauteilen liegt. Die Abdichtung der Verbindung erfolgt dann durch die übliche Abdichtung zwischen Kurbelgehäuse und Zylinderkopf.

Durch Anbau des Abgasrückführungsventils und des Sekundärluftventils an die Außenseite des Gehäuses der Brennkraftmaschine können kompakte Abmessungen und einfacher konstruktiver Aufbau des Gehäuses in einem sinnvollen Kompromiß ermöglicht werden. Die externe Unterbringung der beiden Ventile nimmt im Vergleich zu zwei separaten und externen Gesamtsystemen einen relativ geringen Bauraum in Anspruch. Eine interne Unterbringung würde jedoch erheblichen konstruktiven Mehraufwand bedeuten, der zu einer wesentlichen Verteuerung der Herstellungsverfahren und zu Problemen hinsichtlich der Steifigkeit bzw. der Gewichtsoptimierung führen würde.

Der von den Ventilen benötigte externe Bauraum wird klein gehalten, wenn die Ventile an einer gemeinsamen Anschlußfläche am Gehäuse angeordnet sind und wenn von dieser Anschlußfläche Verbindungen zur Sammelleitung und zum Ansaugsystem bestehen. Durch eine gemeinsame Anschlußfläche wird darüber hinaus der Bearbeitungsaufwand klein gehalten.

Wird die Brennkraftmaschine mit integrierter Abgasrückführung und Sekundärlufteinspeisung als zweireihige Brennkraftmaschine ausgebildet, kann durch eine einzige Verbindungsleitung auf einfache und kostengünstige Weise eine Zusammenführung erreicht werden, so daß bei weitgehender Integration der Kanäle in das Gehäuse der Ventilaufwand minimiert wird.

Weitere Vorteile der Erfindung und vorteilhafte Weiterbildungen ergeben sich aus den Unteransprüchen und der Beschreibung.

Ein Ausführungsbeispiel der Erfindung ist in der nachfolgenden Beschreibung und Zeichnung näher erläutert. Letztere zeigt in
- Fig. 1: einen Querschnitt durch ein Kurbelgehäuse mit angeflanschten Zylinderköpfen eines Boxermotors,
- Fig. 2: eine nur teilweise dargestellte Ansicht der Flanschfläche des Kurbelgehäuses zum Zylinderkopf,
- Fig. 3: eine Ansicht der Anschlußfläche der Abgaskrümmer an den Zylinderkopf,

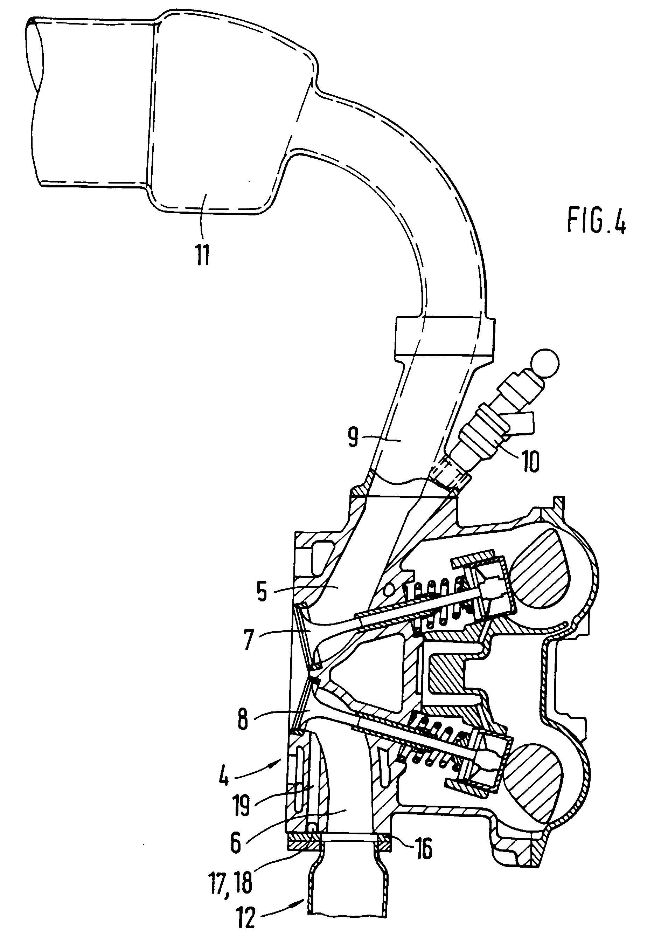

- Fig. 4: einen Querschnitt durch einen Zylinderkopf mit Teilen der Ansauganlage,

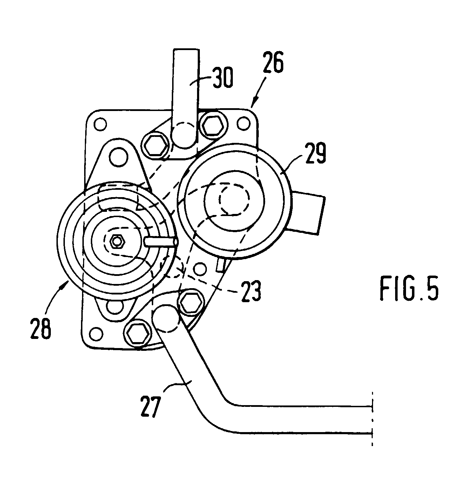

- Fig. 5: eine Ansicht der Anschlußfläche für das Abgasrückführungs- bzw. Sekundärluftventil.

Die im nachfolgenden näher beschriebene Brennkraftmaschine ist ohne Beschränkung der Erfindung auf diese Ausführungsform als Boxermotor dargestellt. Das Kurbelgehäuse 1 der Brennkraftmaschine ist in Längsrichtung geteilt und besteht aus zwei Kurbelgehäusehälften 2, 3 in Open-Deck-Bauweise mit integrierten Zylinderbüchsen. Diese Kurbelgehäusehälften 2, 3 werden jeweils durch einen Zylinderkopf 4 abgedeckt, in dem Einlaßkanäle 5 und Auslaßkanäle 6 sowie entsprechende Einlaßventile 7 bzw. Auslaßventile 8 integriert sind. Der Einlaßkanal 5 ist über ein Saugrohr 9, in den ein Einspritzventil 10 mündet, mit einem Sammelrohr 11 verbunden. In diesem Sammelrohr 11 ist die nicht näher dargestellte, an sich bekannte Drosselklappe zur Regelung der Luftzufuhr ausgebildet. Die Auslaßkanäle 6 sind mit Abgaskrümmern 12 verbunden, die Teil der nicht näher dargestellten Abgasanlage mit Abgaskatalysator sind.

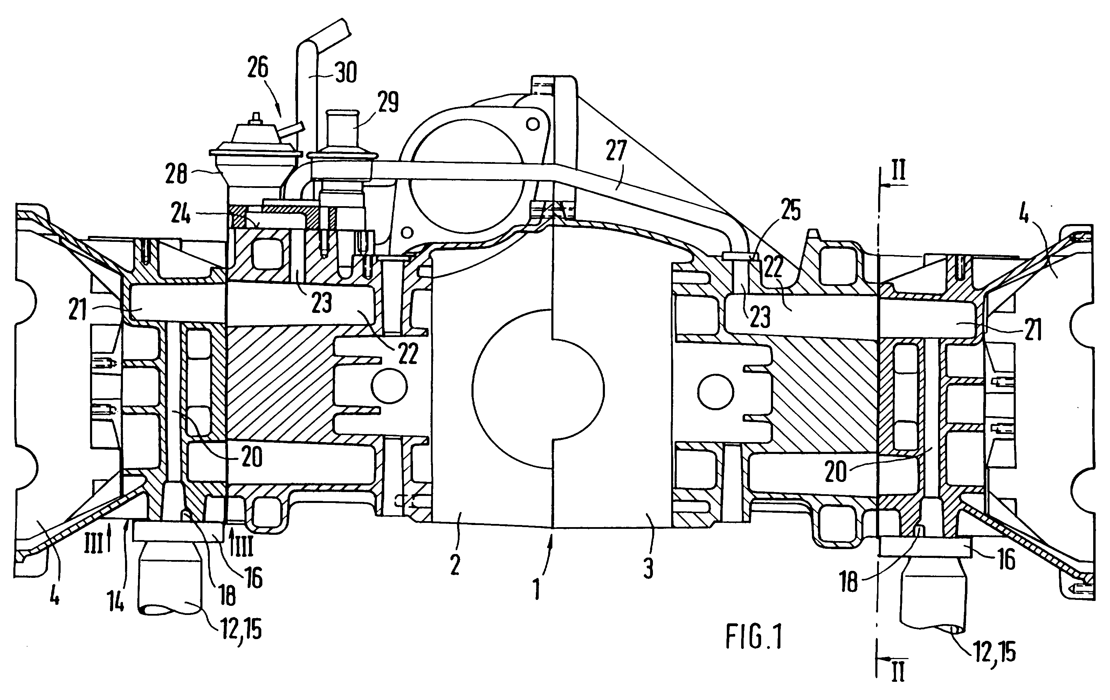

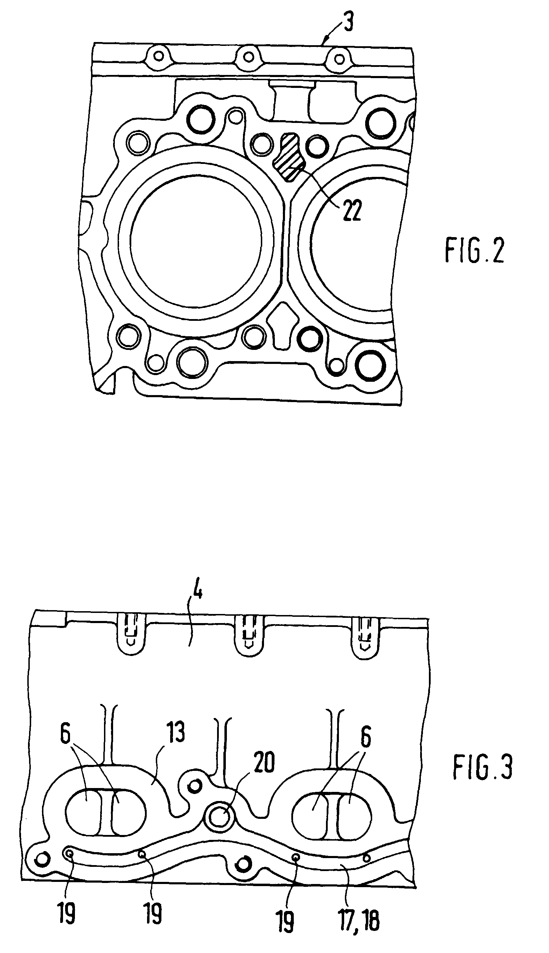

Die nach unten offenen Auslaßkanäle der Zylinder jeder der beiden Zylinderreihen münden in eine gemeinsame Flanschfläche 13 an der Unterseite 14 des Zylinderkopfes 4. In Fig. 3 sind die jeweils zwei Auslaßkanäle 6 des zweiten und dritten Zylinders der linken Zylinderreihe (Fig. 1) dargestellt. Die Flanschfläche 13 umfaßt sämtliche Auslaßkanalöffnungen der Zylinder einer Zylinderreihe und dient als Anschlußfläche einer entsprechenden Abgaskrümmereinheit. Die insgesamt drei Krümmerrohre 15 des Abgaskrümmers 12 münden in eine gemeinsame Flanschplatte 16, die an der Flanschfläche 13 anliegt. In die Flanschfläche 13 ist eine Vertiefung 17 eingelassen, die in diesem Ausführungsbeispiel auf der Kurbelgehäuse zugewandten Seite der Auslaßkanäle 6 ausgebildet ist und die sich über nahezu die gesamte Länge der Flanschfläche 13 erstreckt. Diese Vertiefung 17 wird durch die Flanschplatte 16 des Abgaskrümmers 12 abgedeckt und dient im geschlossenen Zustand als Sammelleitung 18. Von dieser Sammelleitung 18 gehen Sekundärkanäle 19 aus, die jeweils in einen der Auslaßkanäle 6 münden. Diese Sekundärkanäle 19 verlaufen in diesem Ausführungsbeispiel geradlinig und sind als Bohrungen ausgeführt.

Von der Sammelleitung 18 geht ein Verbindungskanal 20 aus, der - in diesem Ausführungsbeispiel - zwischen dem zweiten und dritten Zylinder der linken Zylinderreihe (Fig. 1) bzw. zwischen dem vierten und fünften Zylinder der rechten Zylinderreihe verläuft und der in eine in den Zylinderkopf 4 eingegossene, zum Kurbelgehäuse hin offene Vertiefung 21 mündet. Diese Vertiefung 21 geht über in eine im Kurbelgehäuse 1 bzw. in jeder der beiden Kurbelgehäusehälften 2 bzw. 3 ausgebildete, eingegossene Gehäuseaussparung 22. Diese ist zur Verbindungsfläche mit dem Zylinderkopf 4 offen. In zusammengebautem Zustand der Brennkraftmaschine wird die Verbindung zwischen der Vertiefung 21 und der Gehäuseaussparung 22 über die an sich bekannte Abdichtung zwischen Kurbelgehäuse und Zylinderkopf abgedichtet. In jede der beiden Gehäuseaussparungen 22 mündet eine das Kurbelgehäuse durchdringende Bohrung 23, die jeweils von einer Flanschfläche 24, 25 ausgeht. An die in Fig. 1 auf der linken Seite dargestellte Flanschfläche 24 ist eine Ventileinheit 26 angeflanscht. An die rechte Flanschfläche 25 ist das eine Ende einer Verbindungsleitung 27 angeflanscht, deren anderes Ende mit der Ventileinheit 26 verbunden ist.

Die Ventileinheit 26 setzt sich aus einem Abgasrückführungsventil 28 (AGR-Ventil) und einem Sekundärluftventil 29 zusammen. Beide Ventile sind auf nicht dargestellte Weise mit einem Motorsteuergerät verbunden, das diese in Abhängigkeit vorgegebener Betriebsbedingungen schaltet. Das Sekundärluftventil 29 kann dabei entweder mit einer Sekundärluftpumpe oder als frei saugendes Ventil mit einer Luftfiltereinheit verbunden sein. Das Abgasrückführungsventil 28 ist über eine Verbindungsleitung 30 mit der Sauganlage der Brennkraftmaschine verbunden, d.h. es besteht eine Verbindung zwischen dem Abgasrückführungsventil 28 und dem Sammelrohr 11 mit der nicht dargestellten Drosselklappe. Das Abgasrückführungsventil 28 und das Sekundärluftventil 29 können - wie hier dargestellt - als Einzelventile ausgebildet werden. Es ist jedoch auch möglich, die Ventilfunktionen in einem Kombiventil zu vereinen.

Im Betrieb der Brennkraftmaschine werden die beiden Ventile 28, 29 vom Steuergerät so angesteuert, daß in der Warmlaufphase des Motors über das geöffnete Sekundärluftventil 29 Frischluft angesaugt bzw. eingeblasen wird, die direkt bzw. über die Verbindungsleitung 27, die Bohrungen 23, die Gehäuseaussparungen 22 bzw. die mit ihnen verbundenen Vertiefungen 21 in die Sammelleitungen 18 gelangt. Von diesen Sammelleitungen 18 gelangt die Frischluft bzw. Sekundärluft über die Sekundärkanäle 19 in die Auslaßkanäle 6 und kann somit - wie zuvor beschrieben - zu einer schnelleren Aufheizung der nachgeschalteten Katalysatoren führen. Während der Warmlaufphase ist das Abgasrückführungsventil 28 verschlossen, so daß hier keine Beeinflussung erfolgt. Nach der Warmlaufphase wird das Sekundärluftventil 29 geschlossen, d.h. der Eintrag von Sekundär- bzw. Frischluft wird gestoppt. In Abhängigkeit vom Betriebszustand des Motors wird das Abgasrückführungsventil 28 mehr oder weniger weit geöffnet, so daß über die Sekundärkanäle 19, die Sammelleitungen 18, die Vertiefung 21 und die Gehäuseaussparung 22 sowie die Bohrungen 23 und die Verbindungsleitung 27 ein Teil des Abgasstromes über das geöffnete Abgasrückführungsventil 28 und die Verbindungsleitung 30 in den Ansaugtrakt geleitet wird. Diese teilweise
Rückführung von Abgas in den Ansaugtrakt führt zu der zuvor beschriebenen und an sich bekannten Verbesserung des Abgasverhaltens.

## Patentansprüche

1. Mehrzylindrige Brennkraftmaschine mit einem Ansaug- und einem Abgassystem, einer Zuführeinrichtung für Sekundärluft in das Abgassystem und einem Abgasrückführungssystem, mit einem Zylinderkopf (4) mit mindestens einem Auslaßkanal (6) je Zylinder, mit jeweils mindestens einem in den Zylinderkopf integrierten und in den Auslaßkanal mündenden Sekundärkanal (19), und mit mindestens einer Sammelleitung (18), von der die Sekundärkanäle ausgehen, wobei die Sekundärkanäle und die Sammelleitung in Abhängigkeit vom Betriebsbereich der Brennkraftmaschine zur Abgasrückführung in das Ansaugsystem genutzt werden, dadurch gekennzeichnet, daß die Sammelleitung (18) in dem Zylinderkopf (4) der Brennkraftmaschine integriert ist.

2. Brennkraftmaschine nach Anspruch 1, **dadurch gekennzeichnet,** das die Sammelleitung (18) mit einem Sekundärluftventil (29) und einem Abgasrückführungsventil (28) (AGR-Ventil) verbunden ist, daß das Sekundärluftventil andererseits eine Verbindung zur Umgebungsluft hat, und daß das AGR-Ventil andererseits mit dem Saugsystem (9,11) verbunden ist.

3. Brennkraftmaschine nach Anspruch 1 oder 2, **dadurch gekennzeichnet,** daß die Sammelleitung (17, 18) in eine Flanschfläche (13) des Zylinderkopfes (4) eingelassen ist, daß die Flanschfläche zur Anbindung des Abgaskrümmers (12, 16) dient, und daß die Sammelleitung durch eine Anlagefläche (16) des Abgaskrümmers abgedeckt wird.

4. Brennkraftmaschine nach einem oder mehreren der vorherigen Ansprüche, **dadurch gekennzeichnet,** daß von der Sammelleitung (18) ein Verbindungskanal (20, 21) zu den Ventilen ausgeht, und daß der Verbindungskanal zumindest teilweise zwischen zwei Zylinderbohrungen im Zylinderkopf (4) verläuft.

5. Brennkraftmaschine nach einem oder mehreren der vorherigen Ansprüche, **dadurch gekennzeichnet,** daß der Verbindungskanal (20, 21) in eine Gehäuseaussparung (22) im Kurbelgehäuse (1, 2, 3) mündet.

6. Brennkraftmaschine nach einem oder mehreren der vorherigen Ansprüche, **dadurch gekennzeichnet**, daß die Gehäuseaussparung (22) zur Verbindungsfläche des Kurbelgehäuses (1, 2, 3) mit dem Zylinderkopf (4) offen ist.

7. Brennkraftmaschine nach einem oder mehreren der vorherigen Ansprüche, **dadurch gekennzeichnet**, daß das AGR-Ventil (28) und das Sekundärluftventil (29) an der Außenseite des Gehäuses der Brennkraftmaschine angebracht sind.

8. Brennkraftmaschine nach einem oder mehreren der vorherigen Ansprüche, **dadurch gekennzeichnet**, daß die Ventile (28, 29) an einer gemeinsamen Anschlußfläche (24) am Gehäuse angeordnet sind, und daß von dieser Anschlußfläche Verbindungen (23, 22, 21, 20) zur Sammelleitung und zum Ansaugsystem (9, 11) bestehen.

9. Brennkraftmaschine nach einem oder mehreren der vorherigen Ansprüche, **dadurch gekennzeichnet**, daß zwischen der Gehäuseaussparung (22) im Kurbelgehäuse und der Anschlußfläche (24) eine Verbindungsbohrung (23) verläuft.

10. Brennkraftmaschine nach einem oder mehreren der vorherigen Ansprüche, **dadurch gekennzeichnet**, daß diese zwei Reihen von Zylindern hat, daß von der ersten Reihe von Zylindern die Verbindung zwischen den Sekundärkanälen und den Ventilen vollständig im Gehäuse integriert ist, und daß von den Sekundärkanälen der zweiten Zylinderreihe eine den gehäusefesten Verbindungen nachgeschaltete externe Leitung (27) zu den Ventilen führt.

## Claims

1. A multiple-cylinder internal-combustion engine, having an intake system and an exhaust-gas system, a supply device for secondary air into the exhaust-gas system and an exhaust-gas recirculation system, a cylinder head (4) with at least one outlet port (6) *per* cylinder, at least one respective secondary port (19) integrated in the cylinder head and opening into the outlet port, and at least one collecting line (18) from which the secondary ports start, wherein the secondary ports and the collecting line are used for recirculating the exhaust gas into the intake system in accordance with the operating range of the internal-combustion engine, **characterized in that** the collecting line (18) is integrated in the cylinder head (4) of the internal-combustion engine.

2. An internal-combustion engine according to Claim 1, **characterized in that** the collecting line (18) is connected to a secondary-air valve (29) and an exhaust-gas recirculation valve (28) (EGR valve), the secondary-air valve is provided at the other end with a connexion to the surrounding air, and the EGR valve is connected at the other end to the intake system (9, 11).

3. An internal-combustion engine according to Claim 1 or 2, **characterized in that** the collecting line (17, 18) is formed in a flange face (13) of the cylinder head (4), the flange face is used for attaching the exhaust-gas manifold (12, 16), and the collecting line is covered by an abutment face (16) of the exhaust-gas manifold.

4. An internal-combustion engine according to one or more of the preceding Claims, **characterized in that** a connecting duct (20, 21) passes from the collecting line (18) to the valves, and the connecting duct extends at least in part between two cylinder bores in the cylinder head (4).

5. An internal-combustion engine according to one or more of the preceding Claims, **characterized in that** the connecting duct (20, 21) opens into a housing aperture (22) in the crankcase (1, 2, 3).

6. An internal-combustion engine according to one or more of the preceding Claims, **characterized in that** the housing aperture (22) is open to the connexion face of the crankcase (1, 2, 3) with the cylinder head (4).

7. An internal-combustion engine according to one or more of the preceding Claims, **characterized in that** the EGR valve (28) and the secondary-air valve (29) are arranged on the outside of the housing of the internal-combustion engine.

8. An internal-combustion engine according to one or more of the preceding Claims, **characterized in that** the valves (28, 29) are arranged on a common attachment face (24) on the housing, and there are connexions (23, 22, 21, 20) from the said attachment face to the collecting line and to the intake system (9, 11).

9. An internal-combustion engine according to one or more of the preceding Claims, **characterized in that** a connecting bore (23) extends between the housing aperture (22) in the crankcase and the attachment face (24).

10. An internal-combustion engine according to one or more of the preceding Claims, **characterized in that** it comprises two rows of cylinders, from the first row of cylinders the connexion between the secondary ports and the valves is integrated completely in the housing, and an external line (27) arranged downstream of the connexions fixed to the housing leads from the secondary ports of the second row of cylinders to the valves.

## Revendications

1. Moteur à combustion interne à plusieurs cylindres comportant un système d'admission et un système d'échappement des gaz, un dispositif d'alimentation pour amener de l'air secondaire dans le système d'échappement des gaz et un système de recyclage des gaz d'échappement, et comportant une culasse (4) ayant au moins un canal d'échappement (6) par cylindre, comportant chaque fois au moins un canal secondaire (19) intégré à la culasse et débouchant dans le canal d'échappement, et comportant au moins une conduite collectrice (18) de laquelle partent les canaux secondaires, les canaux secondaires et la conduite collectrice étant utilisés en fonction du régime du moteur à combustion interne pour le recyclage des gaz d'échappement dans le système d'admission, caractérisé en ce que la conduite collectrice (18) est intégrée à la culasse (4) du moteur à combustion interne.

2. Moteur à combustion interne selon la revendication 1, caractérisé en ce que la conduite collectrice (18) est reliée à une soupape d'air secondaire (29) et à une soupape (28) de recyclage des gaz d'échappement (soupape AGR), en ce que la soupape d'air secondaire est d'autre part en communication avec l'air ambiant, et en ce que la soupape AGR est reliée d'autre part au système d'admission (9, 11).

3. Moteur à combustion interne selon la revendication 1 ou 2, caractérisé en ce que la conduite collectrice (17, 18) est incluse dans une face de bride (13) de la culasse (4), en ce que la face de bride sert à attacher le collecteur de gaz d'échappement (12, 16), et en ce que la conduite collectrice est recouverte par une face d'appui (16) du collecteur de gaz d'échappement.

4. Moteur à combustion interne selon une ou plusieurs des revendications précédentes, caractérisé en ce qu'un canal de liaison (20, 21) part de la conduite collectrice (18) vers les soupapes, et en ce que le canal de liaison s'étend au moins partiellement dans la culasse (4) de cylindre.

5. Moteur à combustion interne selon une ou plusieurs des revendications précédentes, caractérisé en ce que le canal de liaison (20, 21) débouche dans une cavité (22) du carter-moteur (1, 2, 3).

6. Moteur à combustion interne selon une ou plusieurs des revendications précédentes, caractérisé en ce que la cavité (22) est ouverte vers la surface de jonction entre le carter-moteur (1, 2, 3) et la culasse (4).

7. Moteur à combustion interne selon une ou plusieurs des revendications précédentes, caractérisé en ce que la soupape AGR (28) et la soupape d'air secondaire (29) sont montées à l'extérieur du carter du moteur à combustion interne.

8. Moteur à combustion interne selon une ou plusieurs des revendications précédentes, caractérisé en ce que les soupapes (28, 29) sont disposées sur une surface de raccordement (24) commune sur le carter et en ce que de cette surface de raccordement partent des liaisons (23, 22, 21, 20) vers la conduite collectrice et vers le système d'admission (9, 11).

9. Moteur à combustion interne selon une ou plusieurs des revendications précédentes, caractérisé en ce qu'un perçage de liaison (23) s'étend entre la cavité (22) du carter-moteur et la surface de raccordement (24).

10. Moteur à combustion interne selon une ou plusieurs des revendications précédentes, caractérisé en ce que celui-ci comporte deux rangées de cylindres, en ce que, s'agissant de la première rangée de cylindres, la liaison entre les canaux secondaires et les soupapes est totalement intégrée au carter, et en ce que, partant des canaux secondaires de la deuxième rangée de cylindres, une conduite externe (27), située en aval des liaisons intégrées au carter, mène aux soupapes.
